# EUROPEAN PATENT APPLICATION

(11) **EP 4 768 900 A1**
(43) Date of publication of application: **01.07.2026**
(21) Application number: 24859052.3
(22) Date of filing: 13.05.2024
(51) Int. Cl.: G01N 23/18, G01N 23/04

(54) **PIPING INSPECTION DEVICE, PIPING INSPECTION METHOD, AND PIPING INSPECTION PROGRAM**

(30) Priority: 25.08.2023 JP 2023137262
(71) Applicant: FUJIFILM Corporation, Tokyo 106-8620 (JP)
(72) Inventor: TANAKA, Eiichi, Tokyo 106-8620 (JP)
(74) Representative: Parker, Andrew James
(86) International application number: PCT/JP2024/017696
(87) International publication number: WO 2025/047003

(57) **Abstract**

A piping inspection apparatus includes a processor. The processor is configured to acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction, and output information based on a difference between the first transmission information and the second transmission information.

## Description

### BACKGROUND OF THE INVENTION

### 1. Field of the Invention

The technology of the present disclosure relates to a piping inspection apparatus, a piping inspection method, and a piping inspection program.

### 2. Description of the Related Art

The following technologies are known for non-destructive inspection of piping. For example, JP1992-343007A (JP-H4-343007A) (hereinafter, Patent Literature 1) describes measuring a distribution of transmittances while moving a radiation source and a radiation measurement instrument, which are disposed with a pipe interposed therebetween, in a direction orthogonal to an axis of the pipe, measuring a distribution of transmittances while moving the radiation source and the radiation measurement instrument in a direction orthogonal to a direction of movement during measurement, comparing the distribution of transmittances measured in each of the directions orthogonal to each other with an expected transmittance, and calculating a distribution of blockage rates in each of the orthogonal directions.

JP1992-9606A (JP-H4-9606A) (hereinafter, Patent Literature 2) describes transmitting radiation through a pipe to be measured from at least two intersecting directions to photograph a radiographic image of the pipe, capturing the photographed image using an image input device to detect gradation values of densities at respective points, and comparing the gradation values with a reference value to detect a corroded portion.

JP1999-118735A (JP-H11-118735A) (hereinafter, Patent Literature 3) describes arranging an X-ray generator and an X-ray detector opposite each other with a pipe to be inspected interposed therebetween, irradiating the pipe with X-rays from the X-ray generator, inputting X-ray transmission information of density values related to pipe wall thinning per unit pixel, which is obtained by the X-ray detector from the transmitted X-rays, performing image analysis, and evaluating a wall thinning state of a wall-thinned portion of the pipe.

JP2014-41057A (hereinafter, Patent Literature 4) describes arranging a radiation source and at least two or more radiation detectors that simultaneously receive radiation from the radiation source transmitted through a heat-insulator pipe, spaced apart from each other with the heat-insulated pipe interposed therebetween in a direction intersecting the heat-insulated pipe, moving the radiation source and the radiation detectors along a central axis of the heat-insulated pipe, and measuring a wall thinning thickness of a pipe material based on a change in an amount of transmitted radiation incident on the radiation detectors through a cross-section of the heat-insulated pipe.

### SUMMARY OF THE INVENTION

However, in a case of transmission imaging of a pipe with a radiation source and a panel (detector) disposed opposite each other with the pipe interposed therebetween in the manner as in Patent Literatures 1 to 4, two opposing portions on a side surface of the pipe, namely, a near-side side surface portion and a far-side side surface portion as viewed from the radiation source, are included in a transmission path. Thus, imaging results obtained by such transmission imaging include information on the two side surface portions. For this reason, in some cases, inspection of the pipe may be difficult due to, for example, obscuring of information on one side surface portion by information on the other side surface portion.

Accordingly, it is an object of the technology of the present disclosure to provide an apparatus, a method, and a program that can facilitate inspection of piping even when information on two side surface portions is mixed in imaging results.

To achieve the above object, a piping inspection apparatus according to the technology of the present disclosure includes a processor. The processor is configured to acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction, and output information based on a difference between the first transmission information and the second transmission information.

The processor may be configured to calculate a statistical value of the difference. The processor may be configured to determine whether there is a potential abnormality in the pipe, based on a magnitude of the statistical value. The processor may be configured to determine whether there is a potential abnormality in the pipe, based on a result of comparing the magnitude of the statistical value with a predetermined threshold value. The processor may be configured to determine whether there is a potential abnormality in the pipe, based on an outlier of the magnitude of the statistical value. The processor may be configured to determine a potentially abnormal portion on the side surface of the pipe, based on a sign of the statistical value. The processor may be configured to acquire a plurality of sets of the first transmission information and the second transmission information in a case where transmission imaging of the pipe is performed under different imaging conditions and output the information based on the difference for each of the imaging conditions. The imaging conditions may be imaging positions in the pipe, and the processor may be configured to output the information based on the difference for each of the imaging positions. The imaging positions may be circumferential positions in the pipe, and the processor may be configured to output the information based on the difference for each of the circumferential positions. The imaging positions may be axial positions in the pipe, and the processor may be configured to output the information based on the difference for each of the axial positions. The processor may be configured to generate an imaging plan for performing transmission imaging of the pipe at different imaging positions and acquire a plurality of sets of the first transmission information and the second transmission information in a case where transmission imaging of the pipe is performed in accordance with the imaging plan. The imaging plan may be a plan for performing transmission imaging of the pipe at different imaging positions during movement along the pipe independently in a circumferential direction and an axial direction. The imaging plan may be a plan for performing transmission imaging of the pipe at different imaging positions during helical movement along the pipe. The processor may be configured to output the information based on the difference in association with the imaging plan. The imaging conditions may be imaging times during which transmission imaging of the pipe is performed, and the processor may be configured to output the information based on the difference for each of the imaging times. The two opposing portions on the side surface may be at different circumferential positions on the side surface of the pipe.

A piping inspection method according to the technology of the present disclosure is performed by a computer and includes acquiring first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and outputting information based on a difference between the first transmission information and the second transmission information.

A piping inspection program according to the technology of the present disclosure causes a computer to acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction, and output information based on a difference between the first transmission information and the second transmission information.

The technology of the present disclosure can facilitate inspection of piping even when information on two side surface portions is mixed in imaging results.

### BRIEF DESCRIPTION OF THE DRAWINGS

Fig. 1 is a diagram illustrating an example schematic configuration of a piping inspection system 10 according to the present embodiment;
Fig. 2 is a diagram illustrating an example of an imaging system in a case where a first imaging direction and a second imaging direction are not directly opposite to each other;
Fig. 3 is a diagram illustrating comparative examples of imaging systems;
Fig. 4 is a diagram illustrating an example hardware configuration of a piping inspection apparatus 100 according to the present embodiment;
Fig. 5 is a diagram illustrating an example functional configuration of a piping inspection apparatus 100 according to a first embodiment;
Fig. 6 is a diagram illustrating an example of the flow of a piping inspection method executed by the piping inspection apparatus 100 according to the first embodiment;
Fig. 7 is a diagram illustrating an example of a difference vector output from the piping inspection apparatus 100 according to the first embodiment;
Fig. 8 is a diagram illustrating another example of the imaging system;
Fig. 9 is a diagram illustrating another example of the difference vector output from the piping inspection apparatus 100 according to the first embodiment;
Fig. 10 is a diagram illustrating an example functional configuration of a piping inspection apparatus 100 according to a second embodiment;
Fig. 11 is a diagram illustrating an example of the flow of a piping inspection method executed by the piping inspection apparatus 100 according to the second embodiment;
Fig. 12 is a diagram illustrating an example functional configuration of a piping inspection apparatus 100 according to a third embodiment;
Fig. 13 is a diagram illustrating an example of a profile output from the piping inspection apparatus 100 according to the third embodiment;
Fig. 14 is a diagram schematically illustrating shifts of wall thinning information;
Fig. 15 is a diagram illustrating an example functional configuration of a piping inspection apparatus 100 according to a fourth embodiment;
Fig. 16 is a diagram illustrating an example of an imaging plan;
Fig. 17 is a diagram illustrating another example of the imaging plan;
Fig. 18 is a diagram schematically illustrating that near-side regions are narrower than far-side regions in transmission information;
Fig. 19 is a diagram schematically illustrating a misalignment between a near-side region and a far-side region in transmission information obtained by helical imaging;
Fig. 20 is a diagram illustrating an example of regions in transmission information in a case where helical imaging is performed twice; and
Fig. 21 is a diagram illustrating an example of a report output from the piping inspection apparatus 100 according to the fourth embodiment.

### DESCRIPTION OF THE PREFERRED EMBODIMENTS

The following describes an example of an embodiment of the present disclosure with reference to the drawings. In the drawings, identical or equivalent components and portions are designated by the same reference numerals. Dimensional ratios in the drawings are exaggerated for convenience of explanation and may differ from actual ratios.

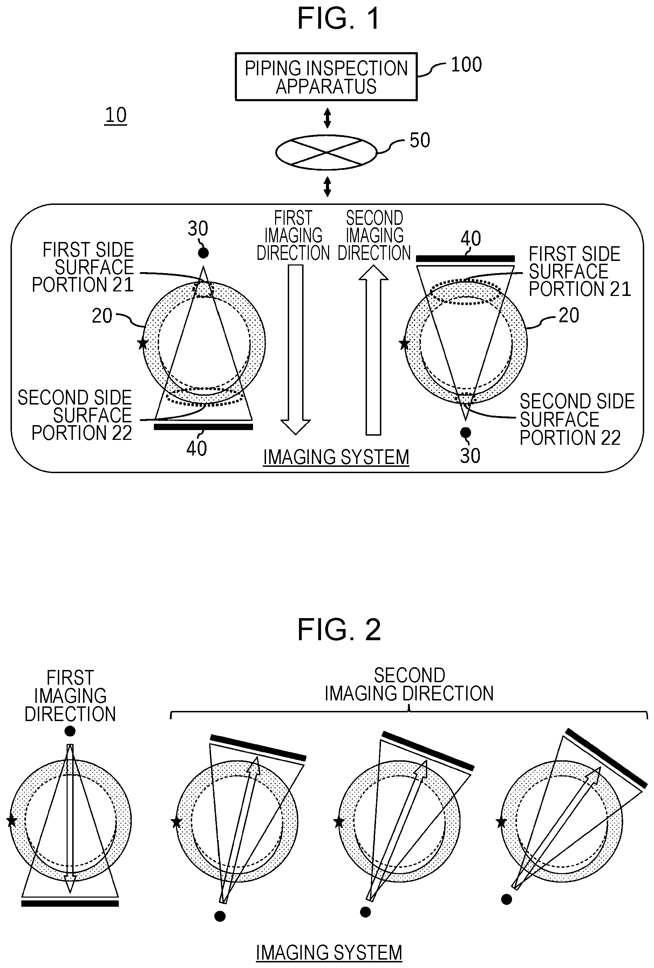

Fig. 1 is a diagram illustrating an example schematic configuration of a piping inspection system 10 according to the present embodiment. The piping inspection system 10 is a system for inspecting abnormalities in a pipe 20. Hereinafter, a case where the piping inspection system 10 targets wall thinning that occurs on an inner wall of the pipe 20 for inspection will be described as an example.

Wall thinning refers to a phenomenon whereby the initial thickness of a pipe through which a fluid flows gradually decreases over time with use. As wall thinning progresses, the fluid leaks and causes serious accidents. To prevent such accidents, it is important to inspect the pipe 20 for wall thinning. Accordingly, the piping inspection system 10 targets wall thinning that occurs on the inner wall of the pipe 20 for inspection. However, the piping inspection system 10 may target any abnormality that may occur in the pipe 20 for inspection, such as wall thinning that occurs on an outer wall of the pipe 20, cracks that occur on the inner wall or the outer wall of the pipe 20, or rust that occurs on the inner wall or the outer wall of the pipe 20.

The piping inspection system 10 includes a communication means 50, a piping inspection apparatus 100, and an imaging system.

The communication means 50 communicably connects a plurality of computers. In Fig. 1, the communication means 50 connects a computer (not illustrated) (e.g., a computer of an imaging device) provided in the imaging system to the piping inspection apparatus 100. As an example, the communication means 50 may be the Internet. However, the communication means 50 may be any means that can communicably connect a plurality of computers, such as a LAN, a WAN, or an intranet, and may use either a wired or wireless connection. In a case where the piping inspection apparatus 100 is incorporated into the imaging system (e.g., in a case where the piping inspection apparatus 100 is configured integrally with the imaging device), the piping inspection system 10 need not include the communication means 50.

The piping inspection apparatus 100 acquires two pieces of transmission information obtained by transmission imaging of the pipe 20 from different imaging directions, and outputs information corresponding to a difference between the two pieces of transmission information. As an example, Fig. 1 illustrates a case where the piping inspection apparatus 100 is implemented by cloud computing. In this case, the piping inspection apparatus 100 may acquire the pieces of transmission information from the imaging system via the communication means 50, which is the Internet, and provide information corresponding to the difference to various computers connected to the Internet. However, this is not limited to this. The piping inspection apparatus 100 may be implemented by an edge server at a site (e.g., a plant) where the pipe 20 is provided, or may be implemented as some functions of the imaging device.

The imaging system performs transmission imaging of the pipe 20 from different imaging directions. Fig. 1 illustrates the imaging system in which the pipe 20 is viewed in cross section. Here, a first side surface portion 21 and a second side surface portion 22 are examples of two opposing portions on a side surface. The two opposing portions on the side surface may be at different circumferential positions on the side surface of the pipe 20. In the imaging system, a radiation source 30 and a panel 40 are disposed opposite each other with the pipe 20 interposed therebetween. Then, radiation is emitted from the radiation source 30, and the dose transmitted through the pipe 20 is detected by the panel 40 to perform transmission imaging of the pipe 20. While any type of radiation such as alpha rays, beta rays, neutron rays, gamma rays, or X-rays may be used, it is preferable to use X-rays with high penetrating power for inspecting the pipe 20.

The left portion of Fig. 1 illustrates the imaging system performing transmission imaging of the pipe 20 from a first imaging direction. In this case, the radiation source 30 and the panel 40 are disposed opposite each other such that the radiation source 30 is positioned above the pipe 20 in Fig. 1 and the panel 40 is positioned below the pipe 20 in Fig. 1, and transmission imaging of the pipe 20 is performed in the first imaging direction from top to bottom in Fig. 1.

The right portion of Fig. 1 illustrates the imaging system performing transmission imaging of the pipe 20 from a second imaging direction opposite to the first imaging direction. In this case, the radiation source 30 and the panel 40 are disposed opposite each other such that the radiation source 30 is positioned below the pipe 20 in Fig. 1 and the panel 40 is positioned above the pipe 20 in Fig. 1, and transmission imaging of the pipe 20 is performed in the second imaging direction from bottom to top in Fig. 1.

When transmission imaging of the pipe 20 is performed in this way, the first side surface portion 21 and the second side surface portion 22 are included in a transmission path from the radiation source 30 to the panel 40. Thus, information on two side surface portions, namely, the first side surface portion 21 and the second side surface portion 22, is mixed in imaging results. For this reason, for example, even if wall thinning has occurred in the second side surface portion 22, the wall thinning may be difficult to detect due to, for example, obscuring of the information on the second side surface portion 22 by the information on the first side surface portion 21. Accordingly, the piping inspection apparatus 100 according to the present embodiment makes it possible to facilitate inspection of the pipe 20 by using a difference in imaging results caused by a difference in imaging directions even when information on two side surface portions is mixed in the imaging results.

In the imaging system illustrated in Fig. 1, a case where the first imaging direction and the second imaging direction are directly opposite to each other is illustrated as an example. However, the first imaging direction and the second imaging direction need not necessarily be directly opposite to each other.

Fig. 2 is a diagram illustrating an example of the imaging system in a case where the first imaging direction and the second imaging direction are not directly opposite to each other. As illustrated in Fig. 2, the first imaging direction and the second imaging direction need not necessarily be directly opposite to each other. In this case, it is only necessary that the first side surface portion 21 included in the transmission path when imaging is performed from the first imaging direction and the first side surface portion 21 included in the transmission path when imaging is performed from the second imaging direction at least partially overlap and that the second side surface portion 22 included in the transmission path when imaging is performed from the first imaging direction and the second side surface portion 22 included in the transmission path when imaging is performed from the second imaging direction at least partially overlap. Therefore, the term "opposing" may be interpreted to include a case where one and the other are not exactly directly opposite to each other.

In the imaging system illustrated in Fig. 1, transmission imaging of the pipe 20 is performed such that two side surface portions (in Fig. 1, the first side surface portion 21 and the second side surface portion 22) are substantially perpendicular to the transmission paths from the radiation source 30 to the panel 40. Such an imaging system is referred to as a Double Wall imaging system.

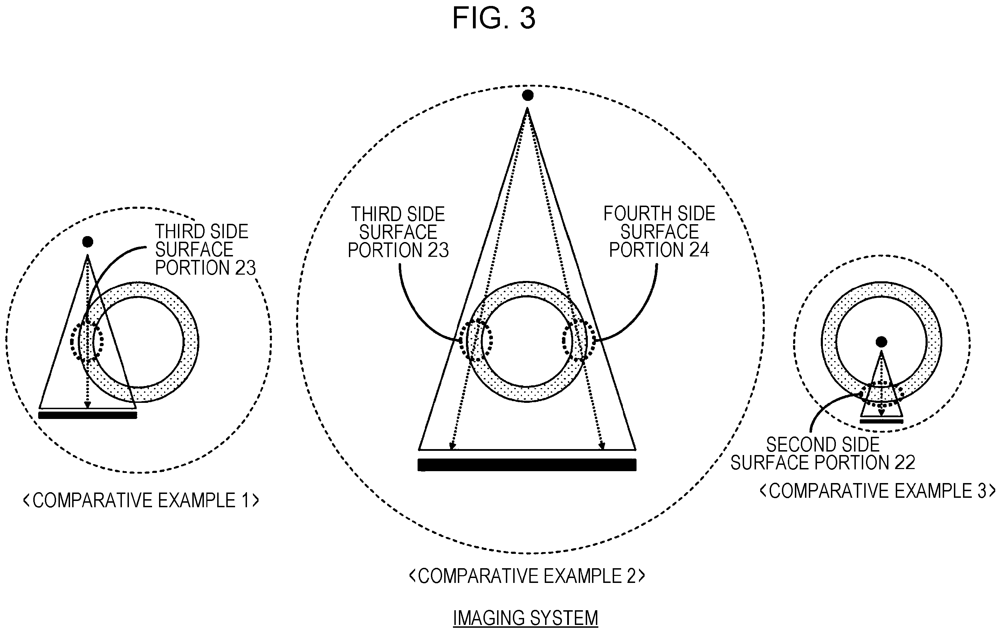

Fig. 3 is a diagram illustrating comparative examples of imaging systems. The left portion of Fig. 3 illustrates Comparative Example 1 in which transmission imaging of the pipe 20 is performed such that one side surface portion (in Fig. 3, a third side surface portion 23) becomes substantially parallel to a transmission path from the radiation source 30 to the panel 40. The center portion of Fig. 3 illustrates Comparative Example 2 in which transmission imaging of the pipe 20 is performed such that two side surface portions (in Fig. 3, the third side surface portion 23 and a fourth side surface portion 24) become substantially parallel to a transmission path from the radiation source 30 to the panel 40. Comparative Example 1 and Comparative Example 2 require a larger space than the Double Wall imaging system according to the present embodiment. The right portion of Fig. 3 illustrates Comparative Example 3 in which the radiation source 30 is installed inside the pipe 20 and transmission imaging of the pipe 20 is performed such that one side surface portion (in Fig. 3, the second side surface portion 22) becomes substantially perpendicular to a transmission path from the radiation source 30 to the panel 40. Comparative Example 3 uses a smaller space than the Double Wall imaging system according to the present embodiment; however, the radiation source 30 needs to be installed inside the pipe 20. In reality, therefore, imaging systems as in Comparative Examples 1 to 3 are impossible to implement at many sites.

Accordingly, the present embodiment employs a Double Wall imaging system. The Double Wall imaging system requires a smaller space than Comparative Examples 1 and 2, and, unlike Comparative Example 3, the radiation source 30 need not be installed inside the pipe 20. Thus, the Double Wall imaging system is possible to implement at various sites. In the Double Wall imaging system, it is preferable that transmission imaging be performed such that the first side surface portion 21 and the second side surface portion 22 are included but the third side surface portion 23 and the fourth side surface portion 24 are not included in a transmission path from the radiation source 30 to the panel 40, because this can minimize the distance between the radiation source 30 and the panel 40. However, in the present embodiment, it is not an essential condition that the third side surface portion 23 and the fourth side surface portion 24 not be included in the transmission path from the radiation source 30 to the panel 40. The present embodiment is also applicable to a case where, in addition to the first side surface portion 21 and the second side surface portion 22, the third side surface portion 23 and the fourth side surface portion 24 are included in the transmission path.

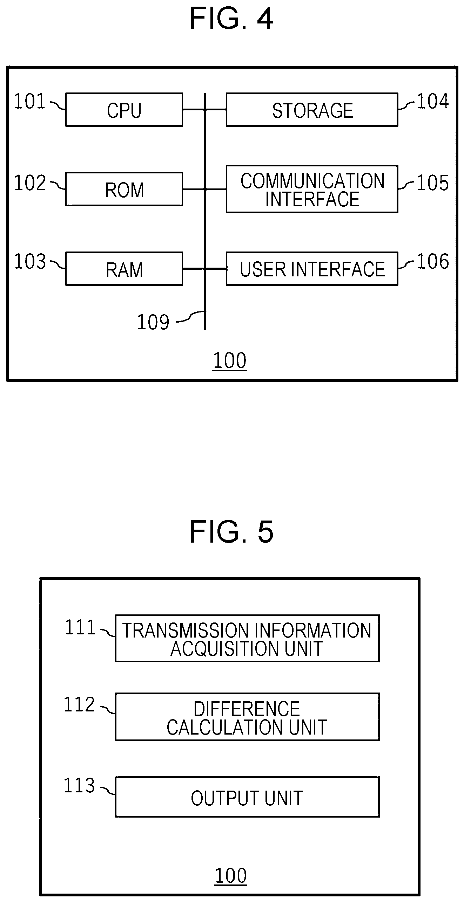

Fig. 4 is a diagram illustrating an example hardware configuration of the piping inspection apparatus 100 according to the present embodiment. The piping inspection apparatus 100 includes a CPU 101, a ROM 102, a RAM 103, a storage 104, a communication interface 105, and a user interface 106. These components are communicably connected to each other via a bus 109.

The CPU 101 is a central processing unit that executes various programs and controls each component. The ROM 102 stores various programs and various data. The RAM 103 serves as a working area and temporarily stores a program or data. The storage 104 is implemented as an HDD (Hard Disk Drive) or an SSD (Solid State Drive) and stores various programs including an operating system and various data.

The communication interface 105 is an interface for the piping inspection apparatus 100 to communicate with another apparatus. The user interface 106 is an input/output interface for the piping inspection apparatus 100 to exchange information with a user. The user interface 106 may include a touch panel, a keyboard, a mouse, a microphone, and so forth as input devices, and may include a monitor, a printer, a speaker, and so forth as output devices.

Fig. 5 is a diagram illustrating an example functional configuration of a piping inspection apparatus 100 according to a first embodiment. The piping inspection apparatus 100 according to the first embodiment includes a transmission information acquisition unit 111, a difference calculation unit 112, and an output unit 113. These functional components are implemented by the CPU 101 reading a piping inspection program from the ROM 102 or the storage 104, loading the piping inspection program into the RAM 103, and executing the piping inspection program. The same applies to other functional components described below.

The CPU 101 serves as the transmission information acquisition unit 111 and acquires first transmission information obtained by transmission imaging of the pipe 20 from a first imaging direction in which two opposing portions on a side surface of the pipe 20 are included in a transmission path, and second transmission information obtained by transmission imaging of the pipe 20 from a second imaging direction opposed to the first imaging direction.

The CPU 101 serves as the difference calculation unit 112 and calculates a difference between the first transmission information and the second transmission information acquired by the transmission information acquisition unit 111.

The CPU 101 serves as the output unit 113 and outputs information based on the difference between the first transmission information and the second transmission information, which is calculated by the difference calculation unit 112.

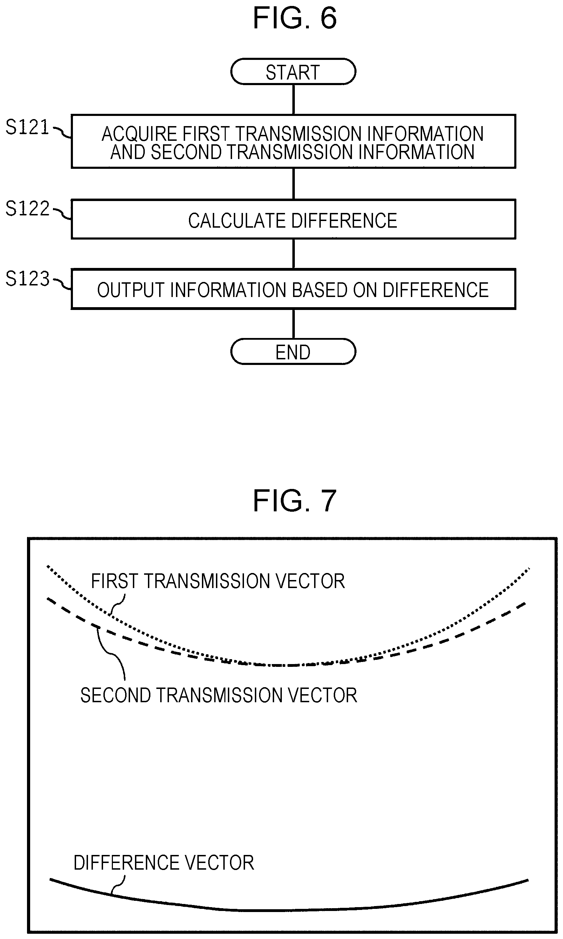

Fig. 6 is a diagram illustrating an example of the flow of a piping inspection method executed by the piping inspection apparatus 100 according to the first embodiment. The illustrated flow is executed by the CPU 101 reading a piping inspection program from the ROM 102 or the storage 104, loading the piping inspection program into the RAM 103, and executing the piping inspection program. The same applies to other flows described below.

In step S121, the CPU 101 acquires first transmission information obtained by transmission imaging of the pipe 20 from a first imaging direction in which two opposing portions on a side surface of the pipe 20 are included in a transmission path, and second transmission information obtained by transmission imaging of the pipe 20 from a second imaging direction opposed to the first imaging direction. In this case, the CPU 101 may acquire the first transmission information and the second transmission information from the imaging system in real time or a database that stores transmission information obtained by imaging in the past.

If no wall thinning has occurred in any portion on the side surface of the pipe 20, the imaging results do not change regardless of the direction of transmission imaging. However, for example, if wall thinning has occurred in the second side surface portion 22 of the pipe 20, a difference occurs in imaging results between a case where transmission imaging of the pipe 20 is performed from the first imaging direction and a case where transmission imaging of the pipe 20 is performed from the second imaging direction. That is, in a case where imaging of the pipe 20 is performed from the first imaging direction, the first side surface portion 21 where no wall thinning has occurred is positioned on a near side as viewed from the radiation source 30, and the second side surface portion 22 where wall thinning has occurred is positioned on a far side as viewed from the radiation source 30. On the other hand, in a case where imaging of the pipe 20 is performed from the second imaging direction, the second side surface portion 22 where wall thinning has occurred is positioned on the near side as viewed from the radiation source 30, and the first side surface portion 21 where no wall thinning has occurred is positioned on the far side as viewed from the radiation source 30. Since radiation emitted from the radiation source 30 spreads radially, the degree of transmission on the near side as viewed from the radiation source 30 has a stronger influence than the degree of transmission on the far side. As a result, a difference occurs between the first transmission information obtained by transmission imaging of the pipe 20 from the first imaging direction and the second transmission information obtained by transmission imaging of the pipe 20 from the second imaging direction. The CPU 101 acquires two pieces of transmission information that differ depending on the imaging direction in such a case where the wall thickness is not uniform between opposing portions on the side surface of the pipe 20.

In step S122, the CPU 101 calculates a difference between the first transmission information and the second transmission information acquired in step S121. The transmission information is vector information having regions such as areas or lines. Thus, the CPU 101 may generate a first transmission vector by arranging, in a line, degrees of transmission for respective regions included in the first transmission information. Similarly, the CPU 101 may generate a second transmission vector by arranging, in a line, degrees of transmission for respective regions included in the second transmission information. Subsequently, the CPU 101 may subtract the second transmission vector from the first transmission vector to calculate a difference vector.

In this case, a fluid flowing through the pipe 20 is not always uniform, and may be biased in one direction due to the influence of gravity or other factors. Accordingly, the CPU 101 may correct the subtraction result using a predetermined correction value to calculate a difference vector.

In step S123, the CPU 101 outputs information based on the difference between the first transmission information and the second transmission information calculated in step S122. For example, the CPU 101 may output the information by displaying, on a monitor, a graph plotting the difference vector calculated in step S122.

Fig. 7 is a diagram illustrating an example of the difference vector output from the piping inspection apparatus 100 according to the first embodiment. In Fig. 7, the horizontal axis indicates a region. In Fig. 7, the vertical axis indicates a degree of transmission, here, a difficulty of transmission, with a larger value indicating more difficult transmission and a smaller value indicating easier transmission. In Fig. 7, a dotted line indicates the first transmission vector, and a broken line indicates the second transmission vector. In Fig. 7, a solid line indicates the difference vector.

The first transmission information is an imaging result obtained by performing transmission imaging such that the first side surface portion 21 is on the near side as viewed from the radiation source 30. Thus, the influence of wall thinning positioned on the far side as viewed from the radiation source 30 is small, resulting in the first transmission vector having a relatively high degree of transmission (difficulty of transmission). On the other hand, the second transmission information is an imaging result obtained by performing transmission imaging such that the second side surface portion 22 is on the near side as viewed from the radiation source 30. Thus, the influence of wall thinning positioned on the near side as viewed from the radiation source 30 is large, resulting in the second transmission vector having a relatively low degree of transmission (difficulty of transmission).

As a result, the difference vector obtained by subtracting the second transmission vector from the first transmission vector is not a zero vector. The piping inspection apparatus 100 utilizes such a fact that information on the near side is enhanced compared to information on the far side, and outputs information corresponding to the difference between the pieces of transmission information obtained by imaging from different directions to provide information that contributes to the detection of wall thinning.

In the above description, a case where extensive wall thinning occurs in the second side surface portion 22 is illustrated as an example. The technology according to the present embodiment is similarly applicable to a case where localized wall thinning occurs.

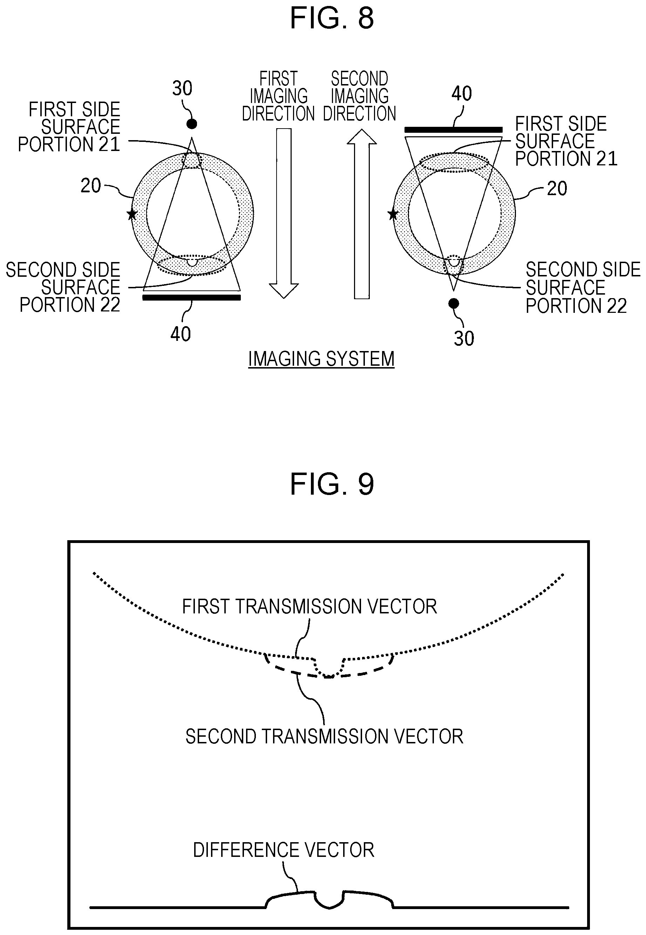

Fig. 8 is a diagram illustrating another example of the imaging system. While a case where extensive wall thinning occurs in the second side surface portion 22 of the pipe 20 is illustrated as an example in Fig. 1, as illustrated in Fig. 8, it is assumed that localized wall thinning has occurred in the second side surface portion 22 of the pipe 20. Even in this case, the piping inspection apparatus 100 can output a difference vector illustrated in Fig. 9 by executing the flow of Fig. 6.

Fig. 9 is a diagram illustrating another example of the difference vector output from the piping inspection apparatus 100 according to the first embodiment. The definition of the axes and the definition of the lines are similar to those in Fig. 7, and will not be described here. As illustrated in Fig. 9, the piping inspection apparatus 100 can also handle not only extensive wall thinning but also localized wall thinning.

In the above description, a case where the piping inspection apparatus 100 outputs a difference vector between the first transmission vector and the second transmission vector as a difference between the first transmission information and the second transmission information is illustrated as an example. However, this is not limiting. For example, when the first transmission information and the second transmission information are image data, the piping inspection apparatus 100 may output a difference image between a first transmission image and a second transmission image as a difference between the first transmission information and the second transmission information.

As described above, one technique for non-destructive inspection of the pipe 20 may use transmission information obtained by imaging using a Double Wall imaging system. Such a Double Wall imaging system requires only a small space and, in addition, does not require the installation of the radiation source 30 inside the pipe 20. Thus, the Double Wall imaging system is possible to implement at various sites.

However, in a case where transmission imaging of the pipe 20 is performed with the radiation source 30 and the panel 40 disposed opposite each other with the pipe 20 interposed therebetween, information on two opposing portions on the side surface of the pipe 20 is mixed in imaging results, which may make inspection of the pipe 20 difficult.

Accordingly, the piping inspection apparatus 100 according to the first embodiment acquires first transmission information obtained by transmission imaging of the pipe 20 from a first imaging direction in which two opposing portions on a side surface of the pipe 20 are included in a transmission path, and second transmission information obtained by transmission imaging of the pipe 20 from a second imaging direction opposed to the first imaging direction, and outputs information based on a difference between the first transmission information and the second transmission information.

With this configuration, in the piping inspection apparatus 100 according to the first embodiment, the information can be represented as a difference between two imaging results when the pipe 20 has non-uniform wall thicknesses in two opposing portions on the side surface thereof. Thus, information that contributes to the detection of wall thinning can be provided. Thus, the piping inspection apparatus 100 according to the first embodiment can facilitate inspection of the pipe 20 even when information on two side surface portions is mixed in imaging results.

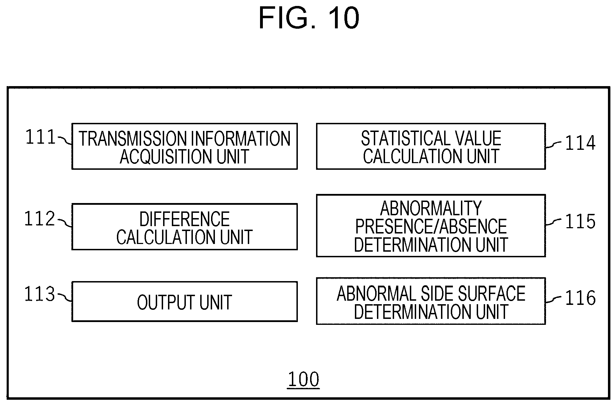

Fig. 10 is a diagram illustrating an example functional configuration of a piping inspection apparatus 100 according to a second embodiment. In the first embodiment, a case where the piping inspection apparatus 100 outputs the calculated difference itself as an inspection result is illustrated as an example. In the second embodiment, the piping inspection apparatus 100 outputs, as an inspection result, a determination result based on the difference. The piping inspection apparatus 100 according to the second embodiment further includes a statistical value calculation unit 114, an abnormality presence/absence determination unit 115, and an abnormal side surface determination unit 116 in addition to the functional configuration included in the piping inspection apparatus 100 according to the first embodiment.

The CPU 101 serves as the statistical value calculation unit 114 and calculates a statistical value of the difference calculated by the difference calculation unit 112.

The CPU 101 serves as the abnormality presence/absence determination unit 115 and determines whether there is a potential abnormality in the pipe 20, based on the magnitude of the statistical value calculated by the statistical value calculation unit 114.

The CPU 101 serves as the abnormal side surface determination unit 116 and determines a potentially abnormal side surface portion of the pipe 20, based on the sign (positive or negative) of the statistical value calculated by the statistical value calculation unit 114.

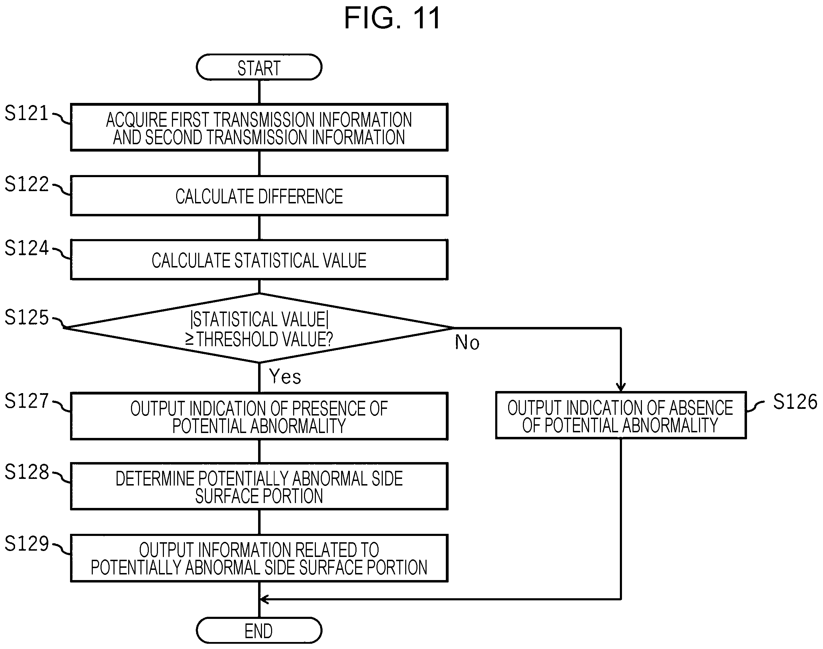

Fig. 11 is a diagram illustrating an example of the flow of a piping inspection method executed by the piping inspection apparatus 100 according to the second embodiment. The processing of steps S121 and S122 may be similar to that in Fig. 6, and will not be described here.

In step S124, the CPU 101 calculates a statistical value of the difference calculated in step S122. For example, the CPU 101 may calculate, as a statistical value, a mean value obtained by averaging the elements of the difference vector calculated in step S122, that is, the degrees of transmission for the respective regions. Alternatively or additionally, the CPU 101 may calculate, as a statistical value, a sum obtained by adding together the degrees of transmission for the respective regions. In this case, the mean value or the sum may be a weighted mean value or a weighted sum. Such a mean value or sum can be regarded as, so to speak, a numerical value (scalar value) that quantifies the possibility of an abnormality (here, wall thinning).

In step S125, the CPU 101 determines whether there is a potential abnormality in the pipe 20, based on the magnitude of the statistical value calculated in step S124. In the second embodiment, the CPU 101 determines whether there is a potential abnormality in the pipe 20, based on a result of comparing the magnitude of the statistical value with a predetermined threshold value. For example, the CPU 101 may determine whether the absolute value of the statistical value is greater than or equal to a predetermined threshold value. If it is determined that the absolute value of the statistical value is not greater than or equal to the threshold value (No), the CPU 101 determines that there is no potential abnormality in the pipe 20. Then, the CPU 101 advances the process to step S126.

In step S126, the CPU 101 outputs an indication that there is no potential abnormality in the pipe 20. For example, the CPU 101 may output the statistical value calculated in step S124 together with a message indicating that there is no potential abnormality. Accordingly, the piping inspection apparatus 100 can notify the user that there is no potential abnormality and provide the user with objective grounds for the determination that there is no potential abnormality.

On the other hand, if it is determined that the absolute value of the statistical value is greater than or equal to the threshold value (Yes), the CPU 101 determines that there is a potential abnormality in the pipe 20. Then, the CPU 101 advances the process to step S127.

In step S127, the CPU 101 outputs an indication that there is a potential abnormality in the pipe 20. For example, the CPU 101 may output the statistical value calculated in step S124 together with a message indicating that there is a potential abnormality. Accordingly, the piping inspection apparatus 100 can notify the user that there is a potential abnormality and provide the user with objective grounds for the determination that there is a potential abnormality.

In step S128, the CPU 101 determines a potentially abnormal side surface portion of the pipe 20, based on the sign (positive or negative) of the statistical value calculated in step S124. For example, as described above, the degree of transmission indicates the difficulty of transmission, and means that a larger value indicates more difficult transmission and a smaller value indicates easier transmission. In calculation of the difference between the first transmission information and the second transmission information, subtraction is performed using the first transmission vector based on the first transmission information as a number (minuend) from which another number is subtracted, and the second transmission vector based on the second transmission information as a number (subtrahend) to be subtracted from another number. In this case, if the statistical value of the difference is positive, the CPU 101 determines that the second side surface portion 22, which is a side surface portion on the far side in the first imaging direction (the near side in the second imaging direction), is a potentially wall-thinned side surface portion. On the other hand, if the statistical value of the difference is negative, the CPU 101 determines that the first side surface portion 21, which is a side surface portion on the near side in the first imaging direction (the far side in the second imaging direction), is a potentially wall-thinned side surface portion.

In step S129, the CPU 101 outputs information related to the potentially abnormal side surface portion determined in step S128. For example, if the second side surface portion 22 is determined to be a potentially wall-thinned side surface portion, the CPU 101 may output information for identifying the second side surface portion 22. In this case, when numbers are assigned to equally spaced positions in a circumferential direction of the pipe 20, the CPU 101 may output a number assigned to the second side surface portion 22 as information on a potentially abnormal side surface portion.

As described above, the piping inspection apparatus 100 according to the second embodiment calculates a statistical value of a difference between first transmission information and second transmission information. With this configuration, the piping inspection apparatus 100 according to the second embodiment can quantify the difference. In this case, the piping inspection apparatus 100 may determine whether there is a potential abnormality in a pipe, based on the magnitude of the statistical value. Accordingly, the piping inspection apparatus 100 can save a user the trouble of making a determination, and can also prevent variation in determination results depending on the user's proficiency. In addition, the piping inspection apparatus 100 may determine a potentially abnormal side surface portion of the pipe, based on the sign (positive or negative) of the statistical value. Accordingly, even when information on two side surface portions is mixed in imaging results, the piping inspection apparatus 100 can inform the user which of the side surface portions is potentially abnormal.

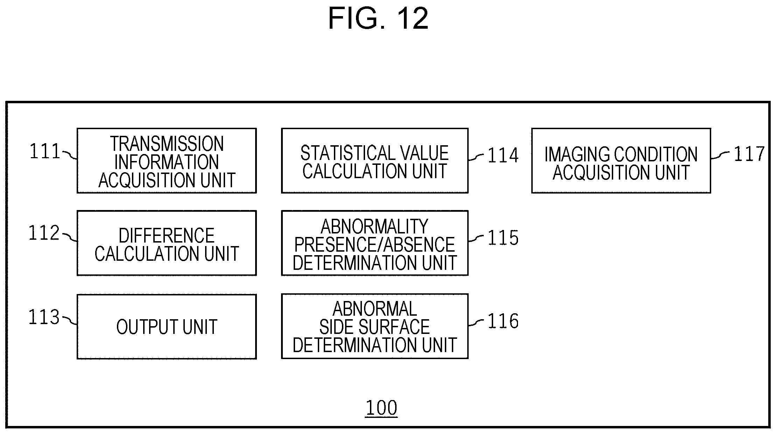

Fig. 12 is a diagram illustrating an example functional configuration of a piping inspection apparatus 100 according to a third embodiment. In the embodiments described above, a case where the piping inspection apparatus 100 outputs an inspection result under a single imaging condition is illustrated as an example. In the third embodiment, the piping inspection apparatus 100 outputs respective inspection results under a plurality of imaging conditions. The piping inspection apparatus 100 according to the third embodiment further includes an imaging condition acquisition unit 117 in addition to the functional configuration included in the piping inspection apparatus 100 according to the second embodiment.

In the third embodiment, the CPU 101 serves as the transmission information acquisition unit 111 and acquires a plurality of sets of first transmission information and second transmission information obtained by transmission imaging of the pipe 20 under different imaging conditions. The imaging conditions may be, for example, imaging positions in the pipe 20. Examples of such imaging positions include circumferential positions and axial positions of the pipe 20. Thus, when transmission imaging of a plurality of imaging positions different in at least one of circumferential position or axial position in the pipe 20 is performed, the CPU 101 may acquire respective sets of first transmission information and second transmission information at the plurality of imaging positions.

The CPU 101 serves as the imaging condition acquisition unit 117 and acquires imaging conditions indicating under which conditions the first transmission information and the second transmission information are obtained by transmission imaging. For example, to acquire a set of first transmission information and second transmission information, the CPU 101 may acquire at least one of a circumferential position or an axial position, and preferably both, of the pipe 20 subjected to transmission imaging.

In the third embodiment, the CPU 101 serves as the difference calculation unit 112 and calculates a difference for each of the imaging conditions. Similarly, the CPU 101 serves as the statistical value calculation unit 114 and calculates a statistical value for each of the imaging conditions. Similarly, the CPU 101 serves as the abnormality presence/absence determination unit 115 and determines whether there is a potential abnormality for each of the imaging conditions. Similarly, the CPU 101 serves as the abnormal side surface determination unit 116 and determines a potentially abnormal side surface portion for each of the imaging conditions. Subsequently, the CPU 101 serves as the output unit 113 and outputs at least one of the difference, the statistical value, or the determination result for each of the imaging conditions.

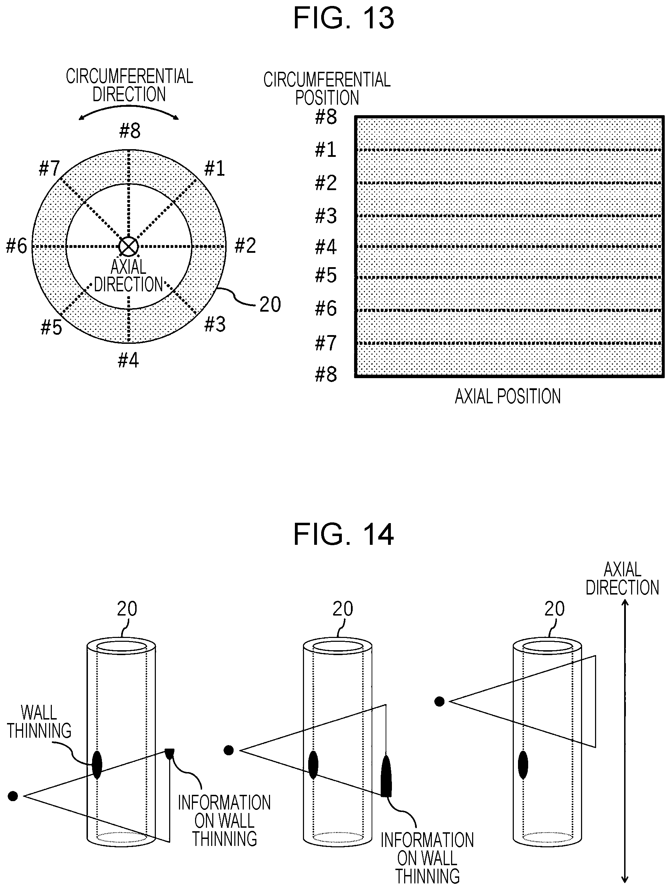

Fig. 13 is a diagram illustrating an example of a profile output from the piping inspection apparatus 100 according to the third embodiment. The left portion of Fig. 13 illustrates a cross-sectional view of the pipe 20. As illustrated in the left portion of Fig. 13, numbers may be assigned to equally spaced positions in the circumferential direction of the pipe 20 (e.g., #1 to #8 may be assigned to eight equally spaced positions).

The right portion of Fig. 13 illustrates a profile. In the right portion of Fig. 13, the vertical axis indicates the circumferential positions of the pipe 20. In the right portion of Fig. 13, the horizontal axis indicates axial positions of the pipe 20. For example, the CPU 101 may output a profile by plotting respective statistical values calculated for a plurality of circumferential positions and a plurality of axial positions. In this case, when statistical values for opposing positions, such as #1 and #5 or #2 and #6, differ only in sign, the CPU 101 may indicate only #1 to #4, for example, while omitting information on the other half of the circumference. In Fig. 13, a two-dimensional profile including both circumferential positions and axial positions is illustrated as an example. However, the CPU 101 may output a one-dimensional profile including only either circumferential positions or axial positions. As described above, to output information based on the difference for each imaging position, the CPU 101 may output the information based on the difference for each circumferential position, for each axial position, or for each circumferential position and each axial position. In the above description, a case where the CPU 101 plots statistical values is illustrated as an example. Alternatively, determination results indicating whether there is a potential abnormality may be plotted.

Fig. 14 is a diagram schematically illustrating shifts of wall thinning information. The pipe 20 has a length in the axial direction, and a user is interested in which axial position in the pipe 20 has wall thinning. However, as illustrated in Fig. 14, when an imaging result of the pipe 20 is continuously observed along the axial direction from an external viewpoint, the wall thinning information appears to shift over time, making it difficult to identify the correct axial position where wall thinning has occurred from the imaging result.

In contrast, the piping inspection apparatus 100 according to the third embodiment acquires a plurality of sets of first transmission information and second transmission information obtained by transmission imaging of the pipe 20 under different imaging conditions, and outputs information based on a difference for each of the imaging conditions. With this configuration, the piping inspection apparatus 100 according to the third embodiment can output the information based on the differences in association with the imaging conditions. In this case, the piping inspection apparatus 100 may output the information based on the differences for the respective imaging positions in the pipe 20, for example, for the respective circumferential positions or the respective axial positions. Accordingly, the piping inspection apparatus 100 can output inspection results obtained at a plurality of imaging positions. Thus, since inspection results obtained at different circumferential positions at the same axial position or inspection results obtained at different axial positions at the same circumferential position are also output, the piping inspection apparatus 100 can provide a user with information for identifying a position where an abnormality has occurred in the pipe 20.

In the above description, a case where the imaging conditions are imaging positions in the pipe 20 is illustrated as an example. The imaging conditions may be imaging times during which transmission imaging of the pipe 20 is performed. In this case, the CPU 101 may output information based on a difference for each of the imaging times. Accordingly, since inspection results obtained during different imaging times at the same imaging position are output, the piping inspection apparatus 100 can provide a user with information for identifying a temporal change of an abnormality that has occurred in the pipe 20.

As described above, in the third embodiment, calculation processing is executed for each of a plurality of imaging conditions. In the third embodiment, therefore, a plurality of calculation results are obtained. The plurality of calculation results can also be used to determine whether there is a potential abnormality. That is, the second embodiment illustrates, as an example, a case where the CPU 101 determines whether there is an abnormality in the pipe 20, based on a result of comparing the magnitude of the statistical value with a predetermined threshold value. In the third embodiment, however, the CPU 101 may determine whether there is a potential abnormality in the pipe 20, based on an outlier of the magnitude of the statistical value. For example, when, as a result of determining the magnitudes of a plurality of statistical values for respective ones of a plurality of imaging conditions, an outlier occurs among the plurality of statistical values, the CPU 101 may determine that there is a potential abnormality in the pipe 20. The outlier may be obtained using a known method such as the mean and variance. Accordingly, the piping inspection apparatus 100 can determine whether there is a potential abnormality, based on a relative criterion instead of based on an absolute criterion.

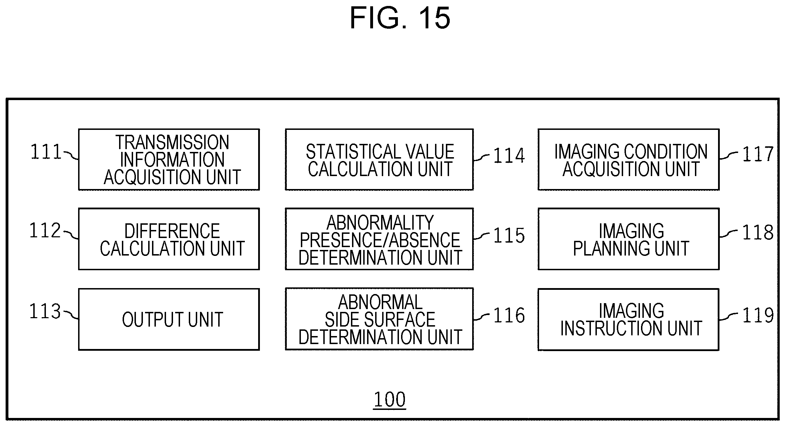

Fig. 15 is a diagram illustrating an example functional configuration of a piping inspection apparatus 100 according to a fourth embodiment. In the embodiments described above, a case where the imaging of the pipe 20 and the inspection of the pipe 20 are independent of each other is illustrated as an example. In the fourth embodiment, the piping inspection apparatus 100 links the imaging of the pipe 20 and the inspection of the pipe 20. The piping inspection apparatus 100 according to the fourth embodiment further includes an imaging planning unit 118 and an imaging instruction unit 119 in addition to the functional configuration included in the piping inspection apparatus 100 according to the third embodiment.

The CPU 101 serves as the imaging planning unit 118 and creates an imaging plan for performing transmission imaging of the pipe 20 under different imaging conditions. The imaging of the pipe 20 may be performed manually based on the imaging plan, or may be performed automatically by a self-propelled robot such as a drone. In the following description, as an example, a self-propelled imaging robot movable along the pipe 20 is used.

The imaging plan may include imaging positions (e.g., circumferential positions and axial positions) for imaging the pipe 20, and a movement schedule for moving to different imaging positions.

The CPU 101 serves as the imaging instruction unit 119 and outputs an instruction to remotely operate the imaging robot in accordance with the imaging plan created by the imaging planning unit 118. In accordance with the instruction, the imaging robot performs transmission imaging of the pipe 20 while moving along the pipe 20. As a result, the CPU 101 can serve as the transmission information acquisition unit 111 and acquire a plurality of sets of first transmission information and second transmission information obtained by transmission imaging of the pipe 20 in accordance with the imaging plan.

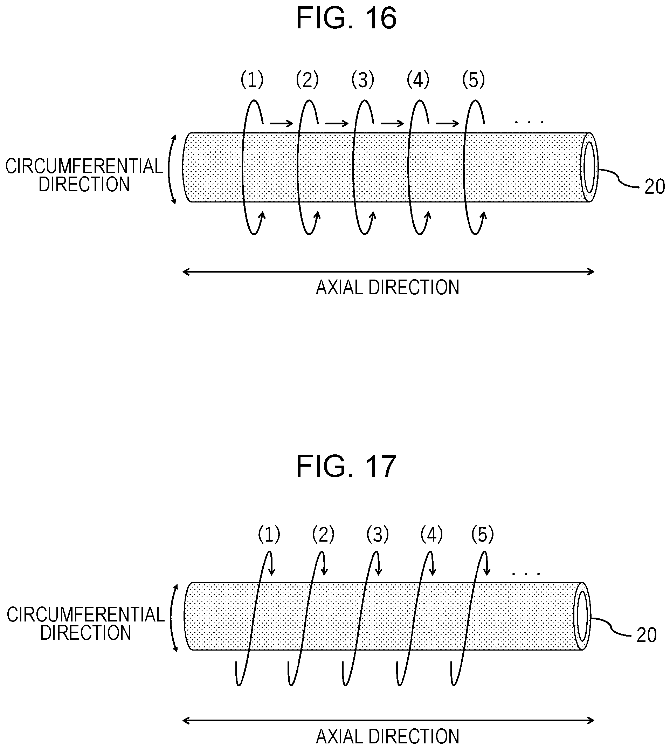

Fig. 16 is a diagram illustrating an example of the imaging plan. Fig. 16 illustrates a case where the imaging robot moves independently in two directions. For example, at an axial position (1), the imaging robot may move in the circumferential direction and sequentially perform imaging at circumferential positions #1 to #8. Next, the imaging robot may move in the axial direction. Subsequently, at an axial position (2), the imaging robot may move in the circumferential direction and sequentially perform imaging at circumferential positions #1 to #8. In this manner, the imaging robot may perform transmission imaging of the pipe 20 at a plurality of circumferential positions and a plurality of axial positions while moving along the pipe 20 independently in the circumferential direction and the axial direction. For example, as described above, the imaging plan may be a plan for performing transmission imaging of the pipe 20 at different imaging positions during movement along the pipe 20 independently in the circumferential direction and the axial direction.

Fig. 17 is a diagram illustrating another example of the imaging plan. Fig. 17 illustrates a case where the imaging robot moves helically. For example, the imaging robot may perform transmission imaging of the pipe 20 at a plurality of circumferential positions and a plurality of axial positions while moving helically along the pipe 20. For example, as described above, the imaging plan may be a plan for performing transmission imaging of the pipe 20 at different imaging positions during helical movement along the pipe 20.

To create an imaging plan, it is necessary to note that a near-side region as viewed from the radiation source 30 is narrower than a far-side region as viewed from the radiation source 30.

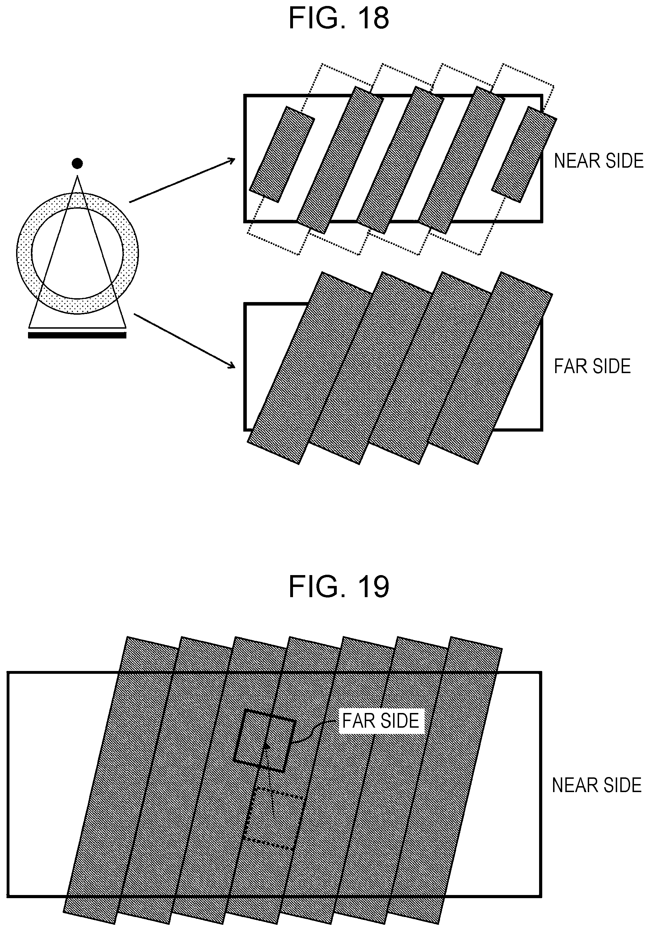

Fig. 18 is a diagram schematically illustrating that near-side regions are narrower than far-side regions in transmission information. As illustrated in Fig. 18, even if an imaging plan is created such that far-side regions as viewed from the radiation source 30 become dense, near-side regions as viewed from the radiation source 30 are sparse. Thus, it may be difficult to acquire sets of first transmission information and second transmission information that are opposed to each other. Accordingly, the CPU 101 may create an imaging plan based on the near-side regions as viewed from the radiation source 30 (i.e., such that the near-side regions as viewed from the radiation source 30 become dense). In this case, the far-side regions as viewed from the radiation source 30 may overlap each other.

In addition, to create an imaging plan for performing transmission imaging of the pipe 20 during helical movement along the pipe 20, it is also necessary to note that misalignments occur between the near-side regions as viewed from the radiation source 30 and the far-side regions as viewed from the radiation source 30.

Fig. 19 is a diagram schematically illustrating a misalignment between a near-side region and a far-side region in transmission information obtained by helical imaging. In helical imaging, as illustrated in Fig. 19, a misalignment occurs between a near-side region as viewed from the radiation source 30 and a far-side region as viewed from the radiation source 30. In this case, it may be difficult to obtain two opposing pieces of transmission information through a single helical imaging session. Accordingly, the CPU 101 may create an imaging plan to perform helical imaging a plurality of times.

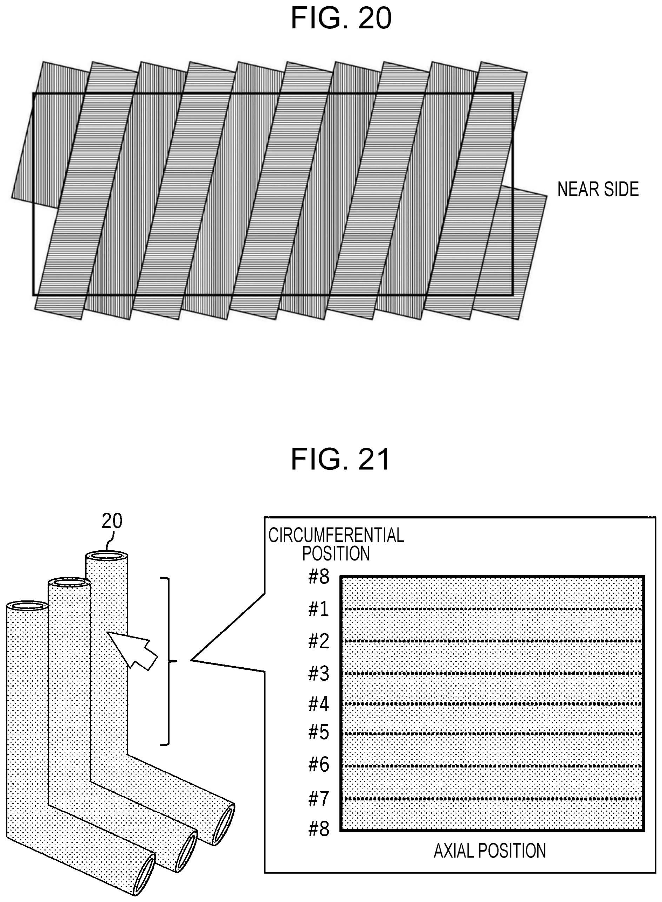

Fig. 20 is a diagram illustrating an example of regions in transmission information in a case where helical imaging is performed twice. In Fig. 20, vertically striped regions represent regions in near-side transmission information obtained through the first helical imaging session. In Fig. 20, horizontally striped regions represent regions in near-side transmission information obtained through the second helical imaging session. Accordingly, for example, a set of two opposing pieces of transmission information is obtained from near-side transmission information obtained through the first helical imaging session and far-side transmission information obtained through the second helical imaging session, and a set of two opposing pieces of transmission information is obtained from near-side transmission information obtained through the second helical imaging session and far-side transmission information obtained through the first helical imaging session.

Fig. 21 is a diagram illustrating an example of a report output from the piping inspection apparatus 100 according to the fourth embodiment. As described above, in the fourth embodiment, the CPU 101 creates an imaging plan for performing transmission imaging of the pipe 20. Thus, the CPU 101 may output a report in which drawings of the pipe 20 obtained when the imaging plan is generated are associated with profiles. In this case, when a user positions a cursor over a region of interest in the pipe 20 through a mouse operation or the like, the CPU 101 may output a profile for the region of interest by, for example, displaying the profile on a monitor. As described above, for example, the CPU 121 may output information based on a difference in association with the imaging plan.

As described above, the piping inspection apparatus 100 according to the fourth embodiment generates an imaging plan for performing transmission imaging of the pipe 20 at different imaging positions, and acquires a plurality of sets of first transmission information and second transmission information obtained by transmission imaging of the pipe 20 in accordance with the imaging plan. With this configuration, the piping inspection apparatus 100 according to the fourth embodiment can link the imaging of the pipe 20 and the inspection of the pipe 20. In this case, the piping inspection apparatus 100 may output information based on a difference in association with the imaging plan. Accordingly, the piping inspection apparatus 100 can provide a user with inspection results along the imaging plan.

In the above embodiments described so far, the term processor refers to a processor in a broad sense, and includes a general-purpose processor (e.g., a CPU or the like) and a dedicated processor (e.g., a GPU: Graphics Processing Unit, an ASIC: Application Specific Integrated Circuit, an FPGA: Field Programmable Gate Array, a programmable logic device, or the like).

The operation of the processor in the embodiments described above is not limited to being performed by a single processor, and may be performed by a plurality of processors located at physically separate positions in cooperation with each other. The order of the operations of the processor is not limited to the order described in the embodiments described above, and may be changed as appropriate.

While the piping inspection apparatus 100 according to the embodiments described above is illustrated as being configured as a single apparatus by way of example, the piping inspection apparatus 100 may include a plurality of devices.

The processing performed by the piping inspection apparatus 100 according to the embodiments described above may be processing performed by software, processing performed by hardware, or processing performed by a combination of both. The processing performed by each component of the piping inspection apparatus 100 may be stored as a program in a storage medium for distribution.

It is to be understood that the present disclosure is not limited to the foregoing description and various modifications may be made without departing from the spirit of the present disclosure.

The disclosure of JP2023-137262 filed on August 25, 2023 is incorporated herein by reference in its entirety. All publications, patent applications, and technical standards mentioned herein are incorporated herein by reference to the same extent as if each individual publication, patent application, and technical standard were specifically and individually indicated to be incorporated by reference.

In relation to the embodiments described above, the following appendices are further disclosed.

### Appendix 1

A piping inspection apparatus including a processor configured to:
acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and
output information based on a difference between the first transmission information and the second transmission information.

### Appendix 2

The piping inspection apparatus according to Appendix 1, wherein the processor is configured to
calculate a statistical value of the difference.

### Appendix 3

The piping inspection apparatus according to Appendix 2, wherein the processor is configured to
determine whether there is a potential abnormality in the pipe, based on a magnitude of the statistical value.

### Appendix 4

The piping inspection apparatus according to Appendix 2 or Appendix 3, wherein the processor is configured to
determine whether there is a potential abnormality in the pipe, based on a result of comparing a magnitude of the statistical value with a predetermined threshold value.

### Appendix 5

The piping inspection apparatus according to Appendix 3 or Appendix 4, wherein the processor is configured to
determine whether there is a potential abnormality in the pipe, based on an outlier of the magnitude of the statistical value.

### Appendix 6

The piping inspection apparatus according to any one of Appendices 2 to 5, wherein the processor is configured to
determine a potentially abnormal portion on the side surface of the pipe, based on a sign of the statistical value.

### Appendix 7

The piping inspection apparatus according to any one of Appendices 1 to 6, wherein the processor is configured to:
acquire a plurality of sets of the first transmission information and the second transmission information in a case where transmission imaging of the pipe is performed under different imaging conditions; and
output the information based on the difference for each of the imaging conditions.

### Appendix 8

The piping inspection apparatus according to Appendix 7, wherein
the imaging conditions are imaging positions in the pipe, and
the processor is configured to
output the information based on the difference for each of the imaging positions.

### Appendix 9

The piping inspection apparatus according to Appendix 8, wherein
the imaging positions are circumferential positions in the pipe, and
the processor is configured to
output the information based on the difference for each of the circumferential positions.

### Appendix 10

The piping inspection apparatus according to Appendix 8 or Appendix 9, wherein
the imaging positions are axial positions in the pipe, and
the processor is configured to
output the information based on the difference for each of the axial positions.

### Appendix 11

The piping inspection apparatus according to any one of Appendices 8 to 10, wherein the processor is configured to:
generate an imaging plan for performing transmission imaging of the pipe at different imaging positions; and
acquire a plurality of sets of the first transmission information and the second transmission information in a case where transmission imaging of the pipe is performed in accordance with the imaging plan.

### Appendix 12

The piping inspection apparatus according to Appendix 11, wherein the imaging plan is a plan for performing transmission imaging of the pipe at different imaging positions during movement along the pipe independently in a circumferential direction and an axial direction.

### Appendix 13

The piping inspection apparatus according to Appendix 11, wherein the imaging plan is a plan for performing transmission imaging of the pipe at different imaging positions during helical movement along the pipe.

### Appendix 14

The piping inspection apparatus according to any one of Appendices 11 to 13, wherein the processor is configured to
output the information based on the difference in association with the imaging plan.

### Appendix 15

The piping inspection apparatus according to any one of Appendices 7 to 14, wherein
the imaging conditions are imaging times during which transmission imaging of the pipe is performed, and
the processor is configured to
output the information based on the difference for each of the imaging times.

### Appendix 16

The piping inspection apparatus according to any one of Appendices 1 to 15, wherein the two opposing portions on the side surface are at different circumferential positions on the side surface of the pipe.

### Appendix 17

A piping inspection method performed by a computer, including:
acquiring first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and
outputting information based on a difference between the first transmission information and the second transmission information.

### Appendix 18

A piping inspection program for causing a computer to:
acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and
output information based on a difference between the first transmission information and the second transmission information.

## Claims

1. A piping inspection apparatus comprising a processor configured to:
acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and
output information based on a difference between the first transmission information and the second transmission information.

2. The piping inspection apparatus according to claim 1, wherein the processor is configured to
calculate a statistical value of the difference.

3. The piping inspection apparatus according to claim 2, wherein the processor is configured to
determine whether there is a potential abnormality in the pipe, based on a magnitude of the statistical value.

4. The piping inspection apparatus according to claim 3, wherein the processor is configured to
determine whether there is a potential abnormality in the pipe, based on a result of comparing the magnitude of the statistical value with a predetermined threshold value.

5. The piping inspection apparatus according to claim 3 or 4, wherein the processor is configured to
determine whether there is a potential abnormality in the pipe, based on an outlier of the magnitude of the statistical value.

6. The piping inspection apparatus according to any one of claims 2 to 5, wherein the processor is configured to
determine a potentially abnormal portion on the side surface of the pipe, based on a sign of the statistical value.

7. The piping inspection apparatus according to any one of claims 1 to 6, wherein the processor is configured to:
acquire a plurality of sets of the first transmission information and the second transmission information in a case where transmission imaging of the pipe is performed under different imaging conditions; and
output the information based on the difference for each of the imaging conditions.

8. The piping inspection apparatus according to claim 7, wherein
the imaging conditions are imaging positions in the pipe, and
the processor is configured to
output the information based on the difference for each of the imaging positions.

9. The piping inspection apparatus according to claim 8, wherein
the imaging positions are circumferential positions in the pipe, and
the processor is configured to
output the information based on the difference for each of the circumferential positions.

10. The piping inspection apparatus according to claim 8 or 9, wherein
the imaging positions are axial positions in the pipe, and
the processor is configured to
output the information based on the difference for each of the axial positions.

11. The piping inspection apparatus according to any one of claims 8 to 10, wherein the processor is configured to:
generate an imaging plan for performing transmission imaging of the pipe at different imaging positions; and
acquire a plurality of sets of the first transmission information and the second transmission information in a case where transmission imaging of the pipe is performed in accordance with the imaging plan.

12. The piping inspection apparatus according to claim 11, wherein the imaging plan is a plan for performing transmission imaging of the pipe at different imaging positions during movement along the pipe independently in a circumferential direction and an axial direction.

13. The piping inspection apparatus according to claim 11, wherein the imaging plan is a plan for performing transmission imaging of the pipe at different imaging positions during helical movement along the pipe.

14. The piping inspection apparatus according to any one of claims 11 to 13, wherein the processor is configured to
output the information based on the difference in association with the imaging plan.

15. The piping inspection apparatus according to any one of claims 7 to 14, wherein
the imaging conditions are imaging times during which transmission imaging of the pipe is performed, and
the processor is configured to
output the information based on the difference for each of the imaging times.

16. The piping inspection apparatus according to any one of claims 1 to 15, wherein the two opposing portions on the side surface are at different circumferential positions on the side surface of the pipe.

17. A piping inspection method performed by a computer, comprising:
acquiring first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and
outputting information based on a difference between the first transmission information and the second transmission information.

18. A piping inspection program for causing a computer to:
acquire first transmission information and second transmission information, the first transmission information being obtained by transmission imaging of a pipe from a first imaging direction in which two opposing portions on a side surface of the pipe are included in a transmission path, the second transmission information being obtained by transmission imaging of the pipe from a second imaging direction opposed to the first imaging direction; and
output information based on a difference between the first transmission information and the second transmission information.
